# EUROPEAN PATENT APPLICATION

(11) **EP 1 881 661 A1**
(43) Date of publication of application: **23.01.2008**
(21) Application number: 06117545.1
(22) Date of filing: 20.07.2006
(51) Int. Cl.: H04L 27/00, H04Q 7/32, H04L 29/06, H04L 27/26, G06F 13/00, H04L 1/00

(54) **Method and device to process a received analog signal and to extract digital data there from according to a plurality of protocols**

(71) Applicant: Abilis Systems Sarl, 1228 Plan-Les-Ouates (CH)
(72) Inventor: Mathys, Yves, 1233, Bernex (CH); Duret, Alain, 74800, Saint-Pierre-en-Faucigny (FR)
(74) Representative: Wenger, Joel-Théophile

(57) **Abstract**

According to the invention, it is proposed a new method and device to process radio signal and convert them into MPEG transport stream (TS) packets, IP packets or other transport stream formats.
This is achieved through a method to process a received analog signal and to extract digital data according to a plurality of protocols by a processing chain having at least a receiver module, a front-end module, an OFDM Engine and a de-interleaver module comprising several error correction cores, the OFDM Engine having fast programmable execution units, these modules being connected to a processing unit having access to a non-volatile memory.
The main part of the invention is the versatility of the processing chain due to the reconfigurable components. The hardware components are not specifically dedicated to a protocol but are assigned to specific processing.

## Description

### Introduction

This invention concerns the field of mobile communication device and in particular, to wireless mobile communication device able to communicate through one or more communication protocols such as DAB, DVB, WLAN or WiMAX.

### Prior Art

Most broadband communication protocols are based on OFDM modulation, such as DAB, DVB-T, DVB-H, T-DMB, WLAN, WiMAX. Although these standards are based on the same modulation, they differ in many ways and use a variety of modulation parameters and operating modes.

The invention concerns a mobile device having a programmable processing architecture allowing demodulation and modulation of OFDM symbols supporting multiple OFDM standards such as DAB, DVB, WLAN or WiMAX.

Systems today are based on one specific communication protocol handled by dedicated hardware blocks for OFDM processing. In order to support additional OFDM protocols, the entire system must be re-developed. In the final product, the processing elements are duplicated resulting in large area and duplication of similar functional blocks.

**Orthogonal frequency-division multiplexing (OFDM),** also sometimes called **discrete multitone modulation (DMT),** is a complex modulation technique for transmission based upon the idea of frequency-division multiplexing (FDM) where each frequency channel is modulated with a simpler modulation. In OFDM the frequencies and modulation of FDM are arranged to be orthogonal with each other which almost eliminates the interference between channels. Although the principles and some of the benefits have been known for 40 years, it is made popular today by the lower cost and availability of digital signal processing components.

A number of extra useful benefits, particularly multipath resistance, arise when the data is coded with some Forward Error Correction (FEC) scheme prior to modulation called channel coding. This is called Coded OFDM abbreviated to COFDM.

COFDM is also now widely used in Europe and elsewhere for terrestrial digital TV using the DVB-T standard. One of the major benefits provided by COFDM is that it renders radio broadcasts relatively immune to multipath distortion, and signal fading due to atmospheric conditions, or passing aircraft.

In the document US2005079890A1, a mix between hardware functions common to a plurality of protocols and software functions dedicated to one protocol allows to decrease the number of components to process the multimedia data in various formats (GSM, WCDMA, TD-SCMA). However, the number of components is still high since the majority of the components are protocol dependent.

### Brief description of the invention

According to the invention, it is proposed a new method and device to process radio signal and convert them into MPEG transport stream (TS) packets, IP packets or other transport stream formats.

This is achieved through a method to process a received analog signal and to extract digital data according to a plurality of protocols by a processing chain having at least a receiver module, a front-end module, an OFDM Engine and a de-interleaver module comprising several error correction cores, the OFDM Engine having fast programmable execution units, these modules being connected to a processing unit having access to a non-volatile memory, this method comprising the steps of :
- selecting a protocol to interpret the received signal,
- loading by the processing unit initial data from the non-volatile memory into registers of the various modules of the processing chain of the received signal thus setting the module's behavior according to the selected protocol,
- loading by the processing unit programs into the execution units according to the selected protocol,
- setting the data path of the de-interleaver module so as to match the protocol definition,
- adjusting a filter bandwidth of the receiver module according to the selected protocol,
- detecting the proper encoding mode of the received signal by the processing unit (CPU) using the relevant data from the execution units (DSP),
- adjusting some of the module's parameters by loading appropriate data into their registers by the processing unit (CPU) so as to match the detected encoding mode,
- processing the received signal by the various modules of the processing chain according to the loaded data,
- adjusting at least some modules working conditions by dynamically retroacting to these modules by the execution units (DSP).

### Brief description of the drawings

The invention will be better understood thanks to the attached drawings in which:
- the figure 1 shows the block diagram of the processing chain,

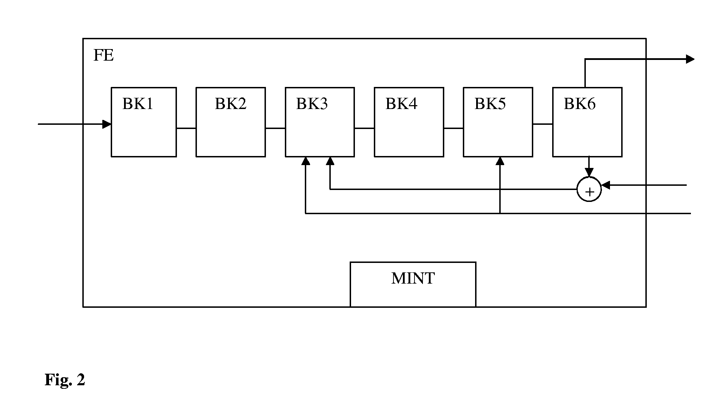

- the figure 2 shows one component of the chain of the figure 1.

### Detailed description of the invention

The main part of the invention is the versatility of the processing chain due to the reconfigurable components. The hardware components are not specifically dedicated to a protocol but are assigned to specific processing.

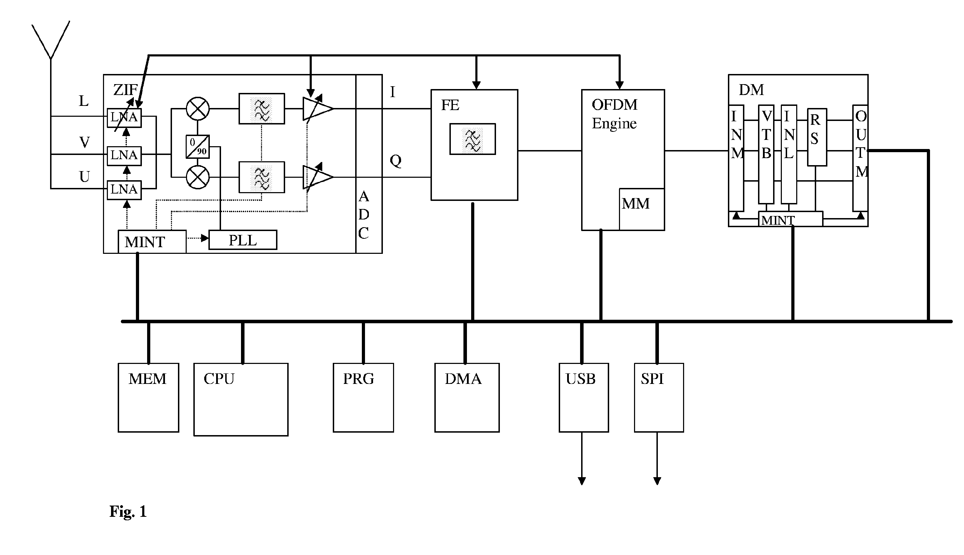

As illustrated in the figure 1, the processing chain is divided into four modules. The first module is dedicated to the analog processing of the various frequency bands applied to the chain. The core of this stage is the ZIF receiver (Zero Intermediate Frequency) which converts the incoming signal directly to base-band. The conversion is performed using a quadrature down-converter. The output of the ADC (analog to digital converter) produces the I and Q components.

The protocol defines the filter bandwidth of the receiver module (ZIF) taking into account the frequency selected.

The input signal is applied to specifics input amplifier (LNA) dedicated to the frequency range. This stage comprises three low noise amplifiers (LNA) which are adjustable (gain) by the processing system (CPU). According to our example, the LNA input L receives frequency in the range of 1500 - 1600 MHz, the input U receives frequency range of 400 - 800 MHz, the input U receives frequency in the range of 180 - 200 MHz. These low noise amplifiers are not limited to 3 bands, system can be expanded to additional frequencies such as below 180 Mhz or above 1.6GHz

The working frequency (PLL) of the ZIP receiver is set by the processing system (CPU) illustrated by the connection through the module interface (MINT). Not only the working frequency (PLL) can be adjusted according to the bandwidth selected, the base-band filters also can be adapted to the working conditions of this stage as well as the gain amplifiers before applying the signals to the ADC converter.

The next module, i.e. the front-end module (FE) is dedicated to the adaptation of the signal and correction. The first block BK1 is dedicated to the DC offset correction which is radio dependent.

The second block BK2 is dedicated to correct the radio signal.

The third block is dedicated to correct the offset of the central frequency of the PLL. This correction can be adjusted dynamically based on the parameters determined by the OFDM engine.

The fourth block BK4 is a filter set according to the current selected base-band. Depending on the protocol used, the base-band can be 1.5, 5 , 6, 7 or 8 MHz.

The fifth block BK5 is in charge of downsampling the signal to reduce the first ADC sampling errors. This is achieved by upsampling the signal and selecting the output data by interpolation.

The sixth block BK6 is a micro-programmable auto-correlation block.

The resulting output of these blocks is a set of data called "symbol" in time domain mode. These symbols *set* or *change* the phase, frequency or amplitude of the reference signal appropriately.

The processing system (CPU) can influence the behavior of the blocks through the module interface MINT. When a protocol is selected the processing unit set the various blocks according to predefined values by loading pre-defined values into their registers.

These symbols are applied to a stage called "OFDM Engine". This module was described in the patent application EP 6114740.1 of the same applicant. The OFDM engine consists of an array of DSP processors. The processing unit CPU can manage the loading of the specific programs into the execution units (DSP processors) according to the protocol set.

The input as well as the output of the OFDM engine are symbols. The outputted symbols are then applied to a de-interleaver and error correction module DM.

According to the protocol currently active, the input multiplexer INM of this de-interleaver module DM set the path of the data. This module comprises several error correction cores which are preferably hardwired. Various cores such as Reed-Solomon decoders (RS), Viterbi decoders (VTB), and Turbo decoder cores are available, all of which are usable on a variety protocols.

The data path from the input multiplexer INM to the output multiplexer OUTM is defined by the processing unit CPU, the data are successively passed through the error correction cores which are dedicated to the current protocol. The same core can be used more than once the data being applied to a second error correction core after a de-interleaving step. Other cores are in charge of the de-interleaving the data by reassigning the data flow as it was at the transmitting side.

The non-volatile memory (MEM) stores the initial data that are loaded into the registers of the various modules. These data are protocol dependent so that the memory comprises several set of data, one per protocol. During the processing of the data flow, the registers are modified to best fit the signal behavior. The central processing unit (CPU) can read the value into the registers and store them into a variable section of the non-volatile memory (MEM). It is often the case that the device has not move away from the last use of the device and instead of loading the initial pre-programmed value, the central processing unit (CPU) can load the better adjusted value taken from the variable section of the memory. It is understood that the variable section can also be divided into blocks, one block per protocol.

The processing chain further comprises input and output capabilities that allow the data to be outputted in the proper format. One of these output interfaces is USB compatible; another is SDIO; or SPI compliant. A DMA (Direct Memory Address) unit can take care of the data outputted from the de-interleaver module DM to direct them to the selected output interface.

The dynamic behavior of the whole chain of modules can be divided into three modes :
- the first mode is the setting up of the protocol general data by the processing unit CPU by loading the appropriate programs into the DSP of the OFDM Engine and setting the various frequencies, filters, correction and interleaver. This mode is the initial state while starting the decode data, the values loaded by the processing unit being pre-programmed data dedicated to that protocol, or previously stored data from the last state before shutting down the device. The processing unit accesses the different modules and stores the registers values defined for the current protocol.
- The second mode is mainly based on the fast processing of the DSP and additional processing from the processing unit CPU. From the initial configuration data received by the processing unit, the DSP analyze the data flow and extract additional information such as the encoding process, the error correction mode etc. The processing unit is in charge of receiving this information and reacts by setting up the some registers within the chain. Based on the received information, the processing unit can adjust the parameters of the chain. It is to be noted that the processing unit reaction is not as fast as the DSP self adjustment. The parameters modified by the processing unit are adjusted rarely, i.e. during the adjustment phase.
- The third mode is based only on the DSP processing chain, i.e. receiving chain, as long as the device is properly working. The DSP can react very quickly to changes in the received signal and can modify some parameters within the chain to optimize the quality of the reception. This is the case in particular for the front-end module FE in which the DSP can adjust the central frequency when errors are detected by the OFDM Engine. The processing unit CPU still oversees the functioning of the chain by receiving error reports from the error correction cores.

The switch from a first protocol to a second protocol is very quick. The processing unit accesses the registers of all modules or blocks to set the new working conditions. The values loaded into them can be either pre-programmed data for the specific protocol or the former data applied to the chain while decoding this protocol. For that purpose, the device contains a non-volatile memory which stores the data applied to the various registers.

## Claims

1. Method to process a received analog signal and to extract digital data there from according to a plurality of protocols by a processing chain having at least a receiver module (ZIF), a front-end module (FE), an OFDM Engine and a de-interleaver module (DM) comprising several error correction cores, the OFDM Engine having fast programmable execution units (DSP), these modules being connected to a processing unit (CPU) having access to a non-volatile memory (MEM), this method comprising the steps of :
- selecting a protocol to interpret the received signal,
- loading by the processing unit (CPU) initial data from the non-volatile memory (MEM) into registers of the various modules of the processing chain of the received signal thus setting the module's behavior according to the selected protocol,
- loading by the processing unit (CPU) programs into the execution units (DSP) according to the selected protocol,
- setting the data path of the de-interleaver module (DM) so as to match the protocol definition,
- adjusting a filter bandwidth of the receiver module (ZIF) according to the selected protocol,
- detecting the proper encoding mode of the received signal by the processing unit (CPU) using the relevant data from the execution units (DSP),
- adjusting some of the module's parameters by loading appropriate data into their registers by the processing unit (CPU) so as to match the detected encoding mode,
- processing the received signal by the various modules of the processing chain according to the loaded data,
- adjusting at least some modules working conditions by dynamically retroacting to these modules by the execution units (DSP).

2. Method of claim 1, wherein the initial data are pre-programmed data specific for the selected protocol.

3. Method of claim 1, comprising the steps of :
- storing at least part of the register's values of the various modules of the processing chain while processing a signal according to a given protocol,
- at the selection of this given protocol, loading as initial data the previously stored register's values.

4. Method of claims 1 to 3, while the processing chain switches from a first protocol to a second protocol, this method comprising the steps of :
- reloading programs into the execution units (DSP) according to the second protocol,
- setting the data path of the de-interleaver module (DM) so as to match the second protocol definition,
- adjusting a second filter bandwidth of the receiver module (ZIF) according to the second protocol definition.

5. Device to process a received analog signal and to extract digital data there from according to a plurality of protocols comprising at least a receiver module (ZIF), a front-end module (FE), an OFDM Engine and a de-interleaver module (DM) comprising several error correction cores, the OFDM Engine having fast programmable execution units (DSP), these modules being connected to a processing unit (CPU) having access to a non-volatile memory (MEM), this device having means to load initial data from the non-volatile memory (MEM) into registers of the various modules of the device, means to load programs into the execution units (DSP), means to set the data path into the de-interleaver module (DM) and means to adjust at least some modules working conditions by dynamically retroacting to these modules by the execution units (DSP).

6. Device of claim 5, **characterized in that**, the non-volatile memory (MEM) comprises several set of initial data, one set per protocol supported by the device.

7. Device of claims 5 or 6, **characterized in that**, the non-volatile memory (MEM) comprises a variable section, the device comprises means to load the register's value of the various modules and means to store them into the variable section of the non-volatile memory (MEM).

8. Device of claim 7, **characterized in that**, it comprises means to load the initial data from the variable section of the non-volatile memory (MEM).
